# EUROPEAN PATENT SPECIFICATION

(11) **EP 0 815 625 B1**
(45) Date of publication and mention of the grant of the patent: **03.07.2002**
(21) Application number: 96906849.3
(22) Date of filing: 15.03.1996
(51) Int. Cl.: H02G 5/06

(54) **BUSBAR JOINT WITH MEANS FOR ATTACHING A COVER**
STROMSCHIENENVERBINDUNG MIT MITTEL ZUM BEFESTIGUNG EINER ABDECKUNG
GARNITURE DE FIXATION DE BARRES OMNIBUS DOTEE D'UN MOYEN DE FIXATION DE COUVERCLE

(30) Priority: 17.03.1995 GB 9505394
(43) Date of publication of application: 07.01.1998
(73) Proprietor: Moeller GmbH, 53115 Bonn (DE)
(72) Inventor: BROOKS, Kevin, Alton, Hampshire GU 34 2EG (GB); BUTCHER, Robert, Overton, Hampshire RG25 3JF (GB); REYNOLDS, Andrew, Swindon, Wiltshire SN2 3LN (GB)
(74) Representative: Parker, Nigel Edward
(86) International application number: GB9600598
(87) International publication number: WO9629768

(56) References cited:
- US-A- 3 472 946
- US-A- 3 559 148
- US-A- 3 571 488
- US-A- 3 956 574
- US-A- 4 401 843
- US-A- 4 849 581
- US-A- 4 886 940

## Description

This invention relates to improvements in or relating to busbars and is more particularly concerned with the manner in which lengths of busbar conductors are connected together in end-to-end relationship.

Various designs of busbar are in operation and these may consist of trunking having an extruded aluminium alloy channel shaped housing defining a base and side walls and an interlocking top cover strip made of Noryl (insulating material). This form of busbar is in use by the Applicant Company, and four or five elongate conductors, for example of aluminium or copper extend side-by-side within the housing. In order to join the elongate conductors together joints (known as joint packs) are utilised consisting of a number of metal conductor plates and insulation plates mounted on a central bolt with spring means extending inbetween the plates around the bolt. Reference is made to our co-pending application No.GB2298969A of even date for a joint. It is known to connect elongate conductors together using "joint packs" and it is known for shaped side plates to be attached to the busbar trunking in a manner straddling the elongate conductors and extending parallel with them to be received in associated slots in the joint pack, more particularly as described in the first paragraph of page 11 of said co-pending Application.

The two side plates are joined in end-to-end relationship (but not in contact) with a second pair of side plates extending from an adjoining length of busbar into opposed slots in the joint pack. When such prior art trunking joints (side plates) are utilised a cover is provided on either side of the busbar to obscure the joint pack from view. In order to connect the covers to each length of busbar to bridge the gap in the trunking packing pieces have to be connected to each length of busbar to provide supporting edges on which the associated cover can engage. The packing pieces normally take the form of metal bars of square cross section which are bolted to the trunking transverse to the trunking axis. Thus, in employing the side plates straddling the elongate conductors, it is also necessary to provide some means of covering the joint pack and gap and the Applicant believes that having to provide separate packing pieces tends to be disadvantageous for several reasons. Firstly, it is believed that the connection of two busbar lengths in end-to-end relationship is more time consuming that need be the case, the connection of the packing pieces to the trunking being a time consuming operation which in itself may not be necessary. Additionally, the extra material required and cost of the packing pieces may perhaps be avoided or alleviated if another design of cover attachment were provided. It is believed there may be other disadvantages with the aforementioned arrangement.

Accordingly, it is an object of the present invention to at least alleviate one or more of the aforementioned, or other, problems involved in joining together busbar lengths or to provide an improved trunking joint.

Reference is made to US 4849581 and US 3472946 which show apparatus relevant to the precharacterising clause of Claims 1 and 2 of this specification.

According to the present invention there is provided a joint for joining together lengths of busbar, said joint comprising two side plates which, in use, lie on either side of or straddle elongate conductors of the busbar and engage a conductor joint joining together said elongate conductors, said side plates being provided with means on which a cover of the joint can be mounted and in which opposed side walls of a generally rectangular wall portion of the side plates are provided with mounting plates having said means for mounting the associated cover thereto.

In this way, there is no need to provide separate packing pieces attached to each busbar length for mounting the cover. Thus, once the side plates have been assembled together in the conductor joint and to each busbar length a cover can be located easily onto said means provided on the side plates. It is envisaged that two covers will be mounted opposed to one another on said means to cover the front and rear of the joint bridging the gap (i.e. the top and bottom of the busbar in use) between the two lengths of busbar.

Further according to the present invention there is provided a joint for joining together lengths of busbar, said joint comprising two side plates which, in use, lie on either side of or straddle elongate conductors of the busbar and engage a conductor joint joining together said elongate conductors, characterised by said side plates being provided with means on which a cover of the joint can be mounted and said means comprising a generally rectangular projecting wall portion of the side plates having opposed side walls extending transversely of the elongate conductors over which side walls flanges of the cover can be engaged.

Said opposed side walls of said rectangular wall portion may be provided with mounting plates (preferably bolted thereto and/or preferably of angle section) having means for mounting the associated cover thereto. Holes may be provided in the mounting plates to receive screw fastening means passing through slots in the cover thereby allowing some adjustability of the cover along the busbar to take into account any tolerances in fitting of the conductor joint to the side plates. Additionally, and advantageously the mounting plates may connect each plate of the pair securely together giving a greater degree of rigidity to the joint.

In one embodiment of the present invention the trunking joint comprises four side plates, one pair of side plates in use being fitted on to one length of busbar straddling elongate conductors extending beyond the busbar tracking and the other pair of side plates being connected to an adjoining length of busbar trunking in a manner surrounding the elongate conductors extending beyond the. end of that length of trunking. Usually each of the side plates will have a flange which is connected to the busbar by fastening means such as a bolt and preferably the side plates will have tabs (preferably projecting at right angles to the flange and inwardly thereof) which fit together when the pair of side plates is assembled in order to define a closed opening for snugly receiving the elongate conductors. Usually, the side plates of the pair will be separately formed rather than being integrally made owing to the fact that the opening will usually embrace the elongate conductors at a position before they have been splayed apart and thus it would not be feasible to slot the splayed apart elongate conductors through the opening if the conductors are to be snugly received. Nevertheless, it is possible that in some embodiments the side plates of one pair may be integrally formed, more particularly if the means for mounting a cover is to be provided at the top or bottom of the busbar only i.e. a front cover might be provided bridging the gap inbetween two lengths of busbar trunking without a rear cover also being provided. Owing to the manner in which the elongate conductors are splayed apart the side plates of each pair need not be identical and it will be usual for one dimension of one of the side plates of the pair to be longer than a similar dimension of the other plate of the pair in order to cater for the asymmetric manner in which the elongate conductors may be splayed apart and indeed to cater for any asymmetry of the conductor joint itself.

Provision may be made for the cover or covers to be adjustable along the lengths of busbar to cater for any tolerances that may be involved and this is preferably by angle section mounting plates connecting to the side plates in the manner previously stated.

It is believed to be particularly advantageous to provide a closed opening snugly surrounding the elongate conductors since these will provide a firm and secure joint.

Still further according to the present invention there is provided a kit of parts including at least one length of busbar and at least one trunking joint in accordance with the preceding statement of invention.

Further according to the present invention there is use of a joint in accordance with the statement of invention as recited on page 3 of this specification to connect together two busbar lengths.

Further advantageous features of the present invention will be evident from the following description and drawings.

An embodiment of a joint for joining together two lengths of busbar in end-to-end relationship will now be described, by way of example only, with reference to the following much simplified accompanying drawings in which:
FIGURE 1 shows a front view of a joint pack connected to side plates of a busbar trunking joint in accordance with the present invention provided at one end of a busbar length;
FIGURE 2 shows a sectional view taken on line II-II of FIGURE 1;
FIGURE 3 shows a view of the end of the busbar and trunking joint side plates looking in the direction of arrow A on FIGURE 2;
FIGURE 4 shows to a different scale a view similar to FIGURE 1 with a cover (cut away) which in use covers the trunking joint and bridges a gap in between two lengths of busbar placed in end-to-end relationship;
FIGURE 5 shows to a different scale views views of one of the side plates in orthographic projection;
FIGURE 6a shows in oblique projection but not to scale two side plates of the trunking joint brought together prior to attachment to a length of busbar in juxtaposition to two side plates for attachment to an adjoining length of busbar;
FIGURE 6b shows a view of a cover not to scale,
FIGURE 7 shows views of a cover mounting plate connectable to a pair of side plates, and
FIGURE 8 shows a view of the side plates fitted with cover mounting plates.

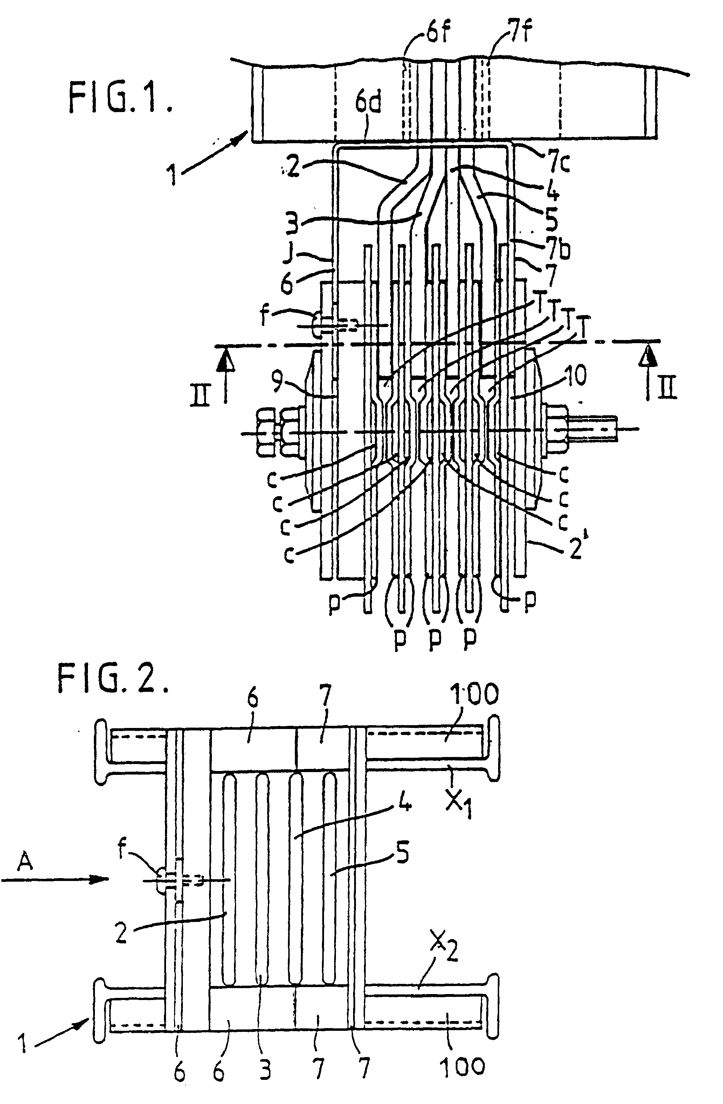

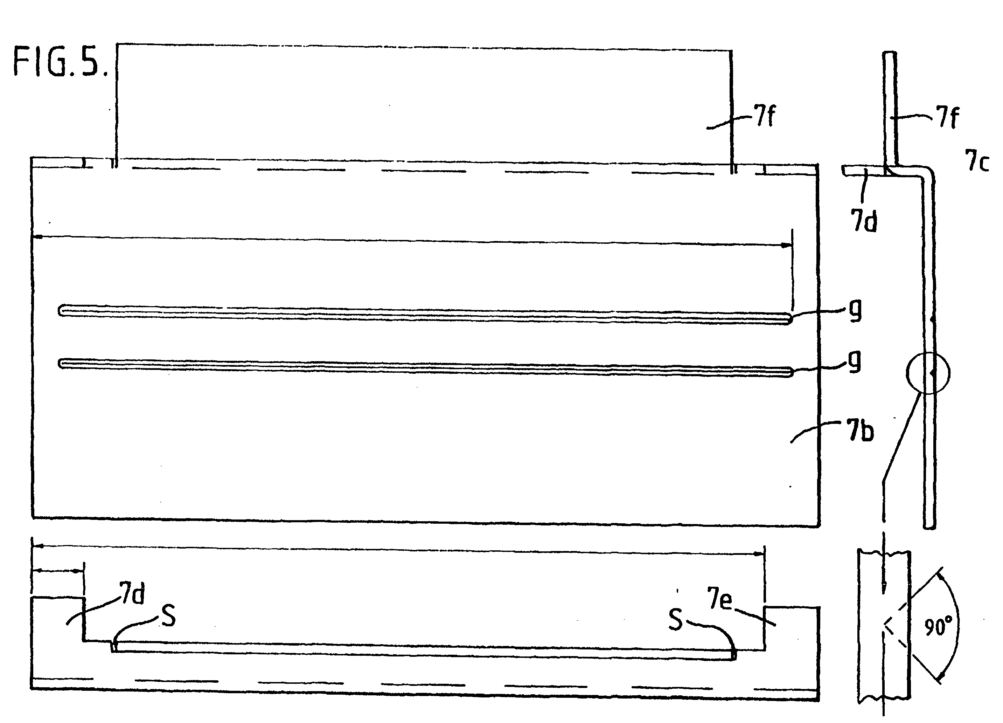

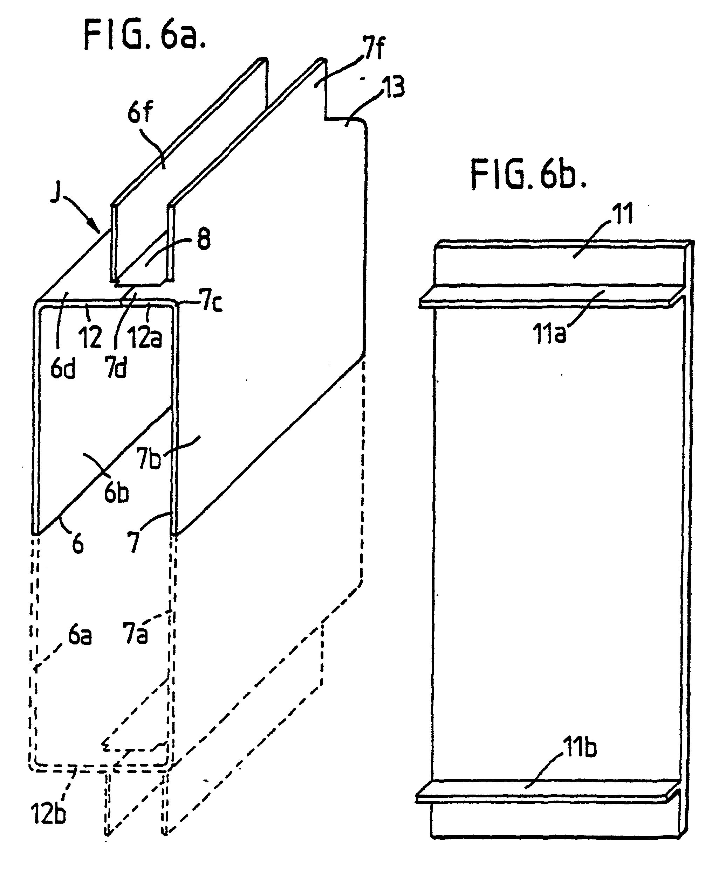

Referring more particularly to the FIGURES 1 to 4 of the drawings, a length of busbar 1 (only the end of the busbar is shown in FIGURES 1 to 4) is generally of a known form comprising a section which is generally "H" shaped and carrying elongate ' conductors 2,3,4,5 (four in this instance) which extend outwardly beyond the end of the busbar length 1. The elongate conductors 2 to 5 are engaged in slots T of a joint pack 2' which forms the subject of our said co-pending application. One half of the trunking joint J, in accordance with the present invention, comprises two side plates 6 and 7 which are brought together (in the manner as shown in FIGURE 6a) to define a rectangular opening 8 for receiving the elongate conductors 2,3,4,5 therethrough, such that the side plates 6 and 7 lie on either side of or straddle the elongate conductors and are received in slots 9 and 10 of the joint pack 2' (see FIGURE 1). The two side plates 6 and 7 are shown juxtaposed a similar pair of side plates 6a,7a (shown in dotted lines in FIGURE 6a) which in use will be connected to a second length of busbar (not shown) to be joined in end-to-end relationship with the busbar length 1. In practice, although side plates 6 and 7 are shown in contact with side plates 6a,7a, there will be a gap between the two pairs of side plates 6,7;6a,7a since they will not actually contact one another in the slots 9 and 10 of the joint pack 2', owing to the central channels C provided in the conductor plates P of the joint pack 2' as generally described in our said co-pending Application. Thus, the joint J comprises the four side plates 6,7;6a,7a which are assembled together surrounding the ends of the elongate conductors 2,3,4,5 (and adjoining ends - not shown - of elongate conductors of a second length of busbar) and defining means on which a cover 11 (see FIGURES 4 and 6b) can be engaged. The trunking joint J defines a generally rectangular projecting wall portion 12 having opposed side walls 12a and 12b over which flanges 11a and 11b of the cover 11 can be engaged. Thus, the projecting side walls 12a,12b provide the means on the joint for engaging the cover 11. Similarly, rectangular wall portion 13 projecting from the joint J in the opposite direction to rectangular portion 12 forms means for attachment of a similar cover 11 covering the rear gap between two adjoining busbar lengths. In practice, the length of each cover 11 will be slightly longer than that shown in FIGURE 6b to cater for the gap which will exist in practice between the two pairs of side plates 6,7;6a,7a when engaged in slots 9 and 10.

One of the side plates 7 is shown in orthographic projection in FIGURE 5. The other side plate 6 of the pair 6,7 is virtually identical to side plate 7 except that one dimension is longer to cater for the asymmetry of the joint pack 2' and the manner in which the conductor lengths 2 to 5 are splayed apart.

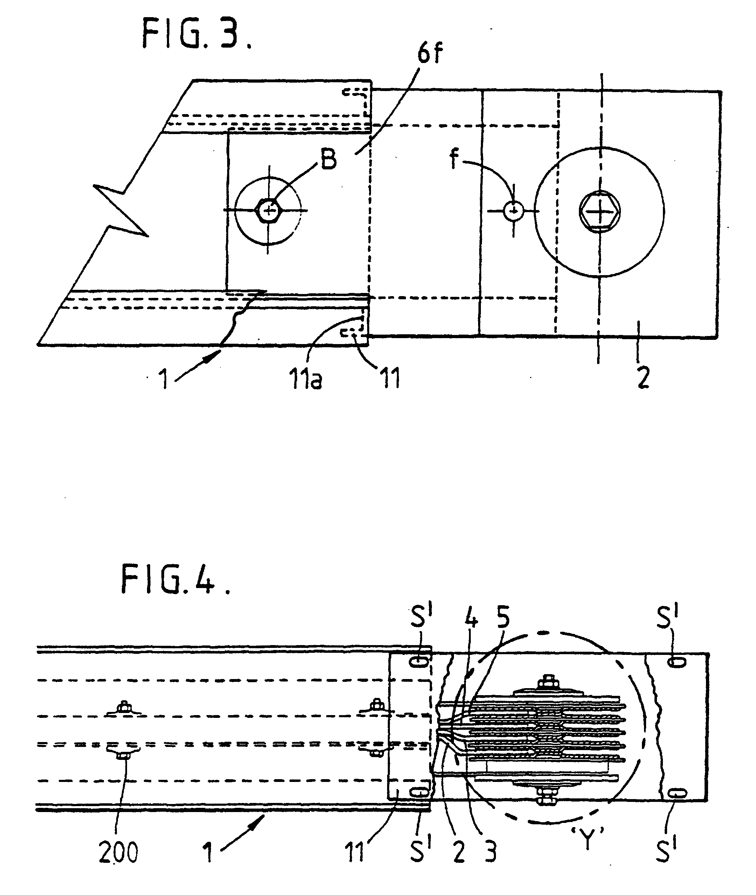

Side plate 7 is provided with a first flat sheet portion 7b which curves at right angles at 7c to form projecting tabs 7d,7e which extend beyond and at right angles to side flange 7f lying inbetween the tabs 7d and 7e and parallel to portion 7b (but which is arranged slightly inwardly of portion 7b). As shown in FIGURES 1 to 3 and more particularly in FIGURE 3, the flange 7f (and also the flange 6f of side plate 6) is somewhat longer than shown in FIGURES 5 and 6a, said side plates 7f and 6f being bolted to the end of the busbar 1 by bolt B (see FIGURE 3).

As previously mentioned, side plate 6 is similar to side plate 7 the difference being the length of the right angled tabs 6d (only one of which is shown) and the tabs 7d,7e. Additionally, the displacement between the flange 6f and flat portion 6b is somewhat greater than the displacement between the flange 7f and flat portion 7b of the side plate 7 in a manner which should be evident from the FIGURES of the drawings. Thus, in assembling the busbar length 1 in end-to-end relationship with another length of busbar the trunking joint J is used comprising side plates 6,7;6a,7a which are assembled together with one pair of side plates 6,7 being bolted to the end of the busbar 1 (by flanges 6f,7f) and the other pair of opposed side plates 6a,7a being bolted to the adjoining length of busbar with said side plates extending into the slots 9 and 10 of the joint pack 2. Additionally, one or more of the side plates 6,7;6a,7a can be connected directly to the joint pack using screw fastening means f (only one such fastening means shown in FIGURES 1 to 3). The projecting wall portions 12 and 13 contact the end of the busbar 1 and extend above and below the associated channel base X₁,X₂ respectively of the busbar 1 (as shown more particularly in FIGURE 2). The projecting wall portions 12 and 13 extend above and below the conductor lengths 2,3,4,5 close to the boundary limits of the busbar section for engagement of the flanges 11a,11b of respective covers 11.

As shown in FIGURE 5, side plate 7 (and also side plates 6,6a,7a) is provided with two transverse grooves G (not shown in FIGURE 6a). The ring detail Z shows enlarged the form of each of the grooves G. Two slots S are defined at either end of the flange 7f and similar slots are provided on side plates 6,6a;7a. The grooves G enable better grip characteristics in the slots 9 and 10 of the joint pack.

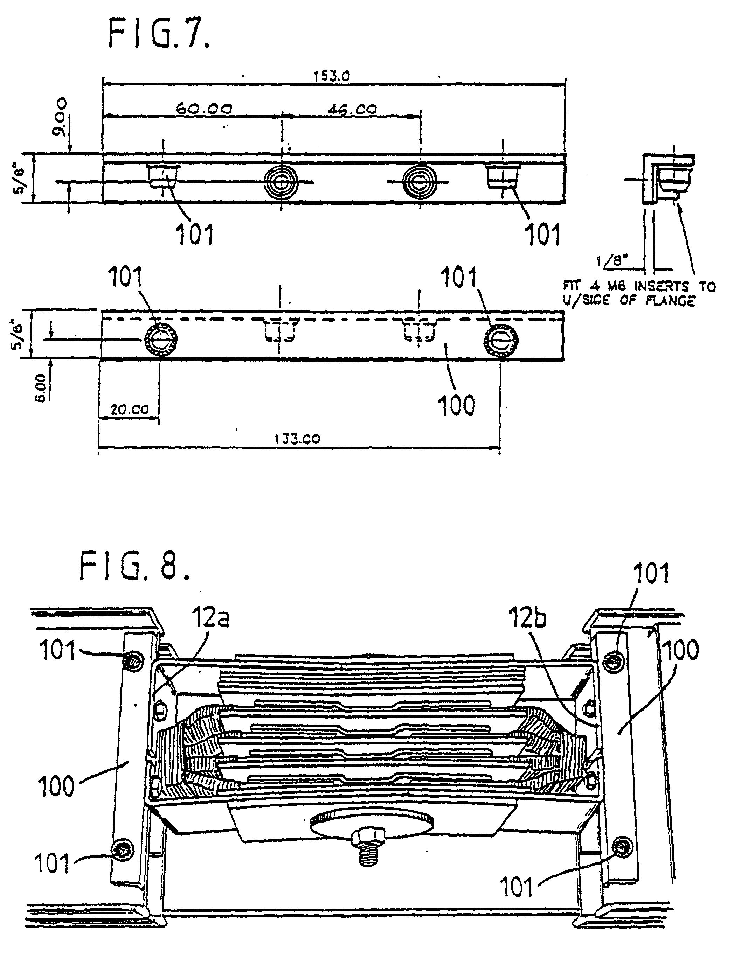

The embodiment of the present invention as aforedescribed may be modified to provide for some adjustability of the cover 11 which may be in the form of a flat plate (or of C-shaped cross section) having screw receiving slots S' provided at each corner (see FIGURE 4). The modification is shown in FIGURES 2 and 8, where cover mounting plates 100 in the form of angle section (angle brackets) are bolted to opposed side walls 12a,12b of the generally rectangular projecting wall portion 12 in a manner which should be self-evident. One of the angle brackets 100 is shown in FIGURE 7.

Each angle bracket 100 has screw mounting holes 101 to receive screws (not shown) which pass through the slots in the cover with the heads of the screws being movable along the slots a small amount to allow for some adjustability of the cover along the busbar in a manner which should be evident. Side walls 13a,13b may also be provided with angle brackets for mounting a cover at the bottom of the busbar, in use, in a manner which should readily be envisaged.

A further important modification to the arrangement as described is the replacement of the threaded bolt and nut connections 200 (see FIGURE 4) with self-piercing rivets. Connecting the busbar extrusion lengths together back-to-back by the nut and bolt connections 200 requires the setting-up of a special jig and it is believed that the process of connecting together the busbar extrusions tends to be more laborious and possibly more expensive than need be the case. Thus, importantly and advantageously, the Applicant connects the busbar extrusions together in back-to-back relationship using self-piercing rivets which do not require the provision of a special jig in the same way as a nut and bolt connecting system. Although self-piercing rivetting systems are known for some applications it is believed that the application in this instance is both novel and inventive partly owing to the scale, thicknesses and type of material used for the busbar. In developing the system the Applicant has had to employ much stronger rivets and thus the application of a self-piercing rivetting method to hold the extruded sections of busbar together is something which could not have been expected. Nevertheless, the Applicant has managed to solve the problems posed by attaching the busbar sections together using self-tapping rivets.

Therefore, a method may be employed of connecting together (extruded) lengths of busbar section, preferably in back-to-back relationship, by means of rivetting and preferably by rivetting with self-piercing rivets.

## Claims

1. A joint (J) for joining together lengths of busbar (1), said joint (J) comprising two side plates (6,7:6a,7a) which, in use, lie on either side of or straddle elongate conductors (2,3,4,5) of the busbar (1) and engage a conductor joint (2') joining together said elongate conductors (2,3,4,5), **characterised by** said side plates (6,7:6a,7a) being provided with means (12a,12b,100) on which a cover (11) of the joint (J) can be mounted and in which opposed side walls (12a,12b) of a generally rectangular wall portion (12) of the side plates (6, 7; 6a, 7a) are provided with mounting plates (100) having said means for mounting the associated cover (11) thereto.

2. A joint (J) for joining together lengths of busbar (1), said joint (J) comprising two side plates (6,7;6a,7a) which, in use, lie on either side of or straddle elongate conductors (2,3,4,5) of the busbar (1) and engage a conductor joint (2') joining together said elongate conductors (2,3,4,5), **characterised by** said side plates (6,7;6a,7a) being provided with means (12a,12b,100) on which a cover (11) of the joint (J) can be mounted and said means (12a,12b,100) comprising a generally rectangular projecting wall portion (12) of the side plates (6, 7; 6a, 7a) having opposed side walls (12a,12b) extending transversely of the elongate conductors (2,3,4,5) over which side walls (12a,12b) flanges (11a,11b) of the cover (11) can be engaged.

3. A joint (J) as claimed in Claim 2 in which said opposed side walls (12a,12b) are provided with mounting plates (100) having said means for mounting the associated cover (11) thereto.

4. A joint (J) as claimed in Claim 1 or Claim 3 in which the mounting plates (100) are bolted to the rectangular wall portion (12).

5. A joint (J) as claimed in Claims 1,3 or Claim 4 in which the mounting plates (100) are of angle section.

6. A joint as claimed in any one of Claims 1,3 to 5 having holes (101) in the mounting plates (100) to receive screw fastening means passing through slots (S) in the cover (11).

7. A joint (J) as claimed in any one of claims 1, 3 to 6 in which the mounting plates (100) connect the two side plates (6,7;6a,7a) securely together.

8. A joint (J) as claimed in any one of the preceding claims comprising four side plates (6,7;6a,7a), one pair of side plates (6,7) in use being fitted on to one length of busbar (1) straddling elongate conductors (2,3,4,5) extending beyond the busbar trunking and the other pair of side plates (6a,7a) being connected to an adjoining length of busbar trunking (1) in a manner surrounding the elongate conductors (2,3,4) extending beyond the end of that length of trunking.

9. A joint (J) as claimed in Claim 8 in which each of the side plates (6,7;6a,7a) has a flange (6f,7f) connected, in use, to the busbar (1) by fastening means (B).

10. A joint (J) as claimed in Claim 9 in which the fastening means is a bolt (B).

11. A joint (J) as claimed in any one of Claims 8 to 10 in which the side plates (6,7a;6a,7a) have tabs (6d,7d,7e) partly forming said opposed side walls (12a,12b).

12. A joint (J) as claimed in Claim 11 in which the tabs (6d,7d,7e) project at right angles to the flange (6f,7f) and inwardly thereof.

13. A joint (J) as claimed in any one of Claims 8 to 12 in which the side plates (6,7;6a,7d) of each pair are separately formed.

14. A joint (J) as claimed in any one of the preceding claims in which one transverse dimension (6d) of one of the side plates of the associated pair (6,7;6a,7a)is arranged across the elongate conductors (2,3,4,5) in use, and is longer than a similar dimension (7d,7e) of the other plate of the pair.

15. A joint (J) as claimed in any one of Claims 1, 3 - 7 and 9 - 13 in which, in use, the cover (11) is engaged on said means (12a,12b,100) to be adjustable along the length of busbar (1).

16. A kit of parts including at least one length of busbar (1) and at least one joint (J) in accordance with any of the preceding claims.

17. Use of a joint (J) in accordance with any one of Claims 1 to 16 to connect together two busbar lengths (1).

18. Use as claimed in Claim 17 and in which busbar sections in each busbar section (1) are connected together by means of rivetting.

19. Use as claimed in Claim 18 in which the busbar sections (1) are connected in back-to-back relationship.

20. Use as claimed in Claim 18 or Claim 19 in which said rivetting is done using self-piercing rivets.

## Patentansprüche

1. Verbindungselement (J) zum gegenseitigen Verbinden von Längenstücken einer Sammelschiene (1), welches Verbindungselement (J) zwei Seitenplatten (6, 7: 6a, 7a) aufweist, die beim Gebrauch auf jeder Seite länglicher Leiter (2, 3, 4, 5) der Sammelschiene (1) liegen oder diese überbrücken und mit einer Leiterverbindung (2') zum gegenseitigen Verbinden der länglichen Leiter (2, 3, 4, 5) in Eingriff stehen, **dadurch gekennzeichnet, dass** die Seitenplatten (6, 7: 6a, 7a) mit einer Einrichtung (12a, 12b, 100) versehen sind, an der eine Abdeckung (11) des Verbindungselementes (J) angebracht werden kann und bei der gegenüberliegende Seitenwände (12a, 12b) eines im allgemeinen rechteckigen Wandabschnitts (12) der Seitenplatten (6, 7: 6a, 7a) mit Montageplatten (100) versehen sind, die die Einrichtung zum Anbringen der zugehörigen Abdeckung (11) aufweisen.

2. Verbindungselement (J) zum gegenseitigen Verbinden von Längenstücken einer Sammelschiene (1), welches Verbindungselement (J) zwei Seitenplatten (6, 7; 6a, 7a) aufweist, die beim Gebrauch auf jeder Seite länglicher Leiter (2, 3, 4, 5) der Sammelschiene (1) liegen oder diese überbrücken und mit einer Leiterverbindung (2') zum gegenseitigen Verbinden der länglichen Leiter (2, 3, 4, 5) in Eingriff stehen, **dadurch gekennzeichnet, dass** die Seitenplatten (6, 7; 6a, 7a) mit einer Einrichtung (12a, 12b, 100) versehen sind, an der eine Abdeckung (11) des Verbindungselementes (J) montiert werden kann, und die Einrichtung (12a, 12b, 100) einen im allgemeinen rechteckigen, vorstehenden Wandabschnitt (12) der Seitenplatten (6, 7; 6a, 7a) aufweist, welcher gegenüberliegende Seitenwände (12a, 12b) hat, die sich quer zu den länglichen Leitern (2, 3, 4, 5) erstrecken, über welchen Seitenwänden (12a, 12b) Flansche (11a, 11b) der Abdeckung (11) in Eingriff sein können.

3. Verbindungselement (J) nach Anspruch 2, **dadurch gekennzeichnet, dass** die gegenüberliegenden Seitenwände (12a, 12b) mit Montageplatten (100) versehen sind, die die Einrichtung zum Anbringen der zugehörigen Abdeckung (11) aufweisen.

4. Verbindungselement (J) nach Anspruch 1 oder 3, **dadurch gekennzeichnet, dass** die Montageplatten (100) an den rechteckigen Wandabschnitt (12) geschraubt sind.

5. Verbindungselement (J) nach den Ansprüchen 1, 3 oder 4, **dadurch gekennzeichnet, dass** die Montageplatten (100) einen abgewinkelten Querschnitt haben.

6. Verbindungselement nach einem der Ansprüche 1, 3 - 5, **gekennzeichnet durch** Bohrungen (101) in den Montageplatten (100) zum Aufnehmen einer Schraubenbefestigungseinrichtung, welche sich **durch** Schlitze (S) in der Abdeckung (11) hin**durch** erstreckt.

7. Verbindungselement (J) nach einem der Ansprüche 1, 3 - 6, **dadurch gekennzeichnet, dass** die Montageplatten (100) die zwei Seitenplatten (6, 7; 6a, 7a) fest miteinander verbinden.

8. Verbindungselement (J) nach einem der vorhergehenden Ansprüche, **gekennzeichnet durch** vier Seitenplatten (6, 7; 6a, 7a), wobei ein Paar von Seitenplatten (6, 7) beim Gebrauch auf ein Längenstück der Sammelschiene (1), die länglichen Leiter (2, 3, 4, 5) überbrückend, aufgesteckt ist, welche Leiter sich über die Sammelschienenverbindung hinaus erstrecken, und wobei das andere Paar von Seitenplatten (6a, 7a) mit einem angrenzenden Längenstück der Sammelschienenverbindung (1) in einer die länglichen Leiter (2, 3, 4) umgebenden Weise verbunden ist, welche Leiter sich über das Ende jenes Längenstücks der Verbindung erstrecken.

9. Verbindungselement (J) nach Anspruch 8, **dadurch gekennzeichnet, dass** jede der Seitenplatten (6, 7; 6a, 7a) einen Flansch (6f, 7f) hat, welcher beim Gebrauch mit der Sammelschiene (1) durch Befestigungsmittel (B) verbunden ist.

10. Verbindungselement (J) nach Anspruch 9, **dadurch gekennzeichnet, dass** das Befestigungsmittel ein Bolzen (B) ist.

11. Verbindungselement (J) nach einem der Ansprüche 8 - 10, **dadurch gekennzeichnet, dass** die Seitenplatten (6, 7a; 6a, 7a) Streifen (6d, 7d, 7e) haben, die teilweise die gegenüberliegenden Seitenwände (12a, 12b) bilden.

12. Verbindungselement (J) nach Anspruch 11, **dadurch gekennzeichnet, dass** die Streifen (6d, 7d, 7e) unter rechten Winkeln nach innen hin von den Flanschen (6f, 7f) abstehen.

13. Verbindungselement (J) nach einem der Ansprüche 8 - 12, **dadurch gekennzeichnet, dass** die Seitenplatten (6, 7; 6a, 7d) jedes Paars getrennt geformt sind.

14. Verbindungselement (J) nach einem der vorhergehenden Ansprüche, **dadurch gekennzeichnet, dass** eine Querabmessung (6d) einer der Seitenplatten des zugehörigen Paars (6, 7; 6a, 7a) im Gebrauch quer über den länglichen Leitern (2, 3, 4, 5) angeordnet und länger als eine ähnliche Abmessung (7d, 7e) der anderen Platte des Paars ausgebildet ist.

15. Verbindungselement (J) nach einem der Ansprüche 1, 3 - 7 und 9 - 13, **dadurch gekennzeichnet, dass** beim Gebrauch die Abdeckung (11) auf der Einrichtung (12a, 12b, 100), entlang dem Längenstück der Sammelschiene (1) einstellbar, in Eingriff kommt.

16. Bausatz von Teilen einschließlich wenigstens eines Längenstücks einer Sammelschiene (1) und wenigstens eines Verbindungselementes (J) nach einem der vorhergehenden Ansprüche.

17. Verwendung eines Verbindungselementes (J) gemäß einem der Ansprüche 1 - 16 zum gegenseitigen Verbinden zweier Sammelschienen-Längenstücke (1).

18. Verwendung nach Anspruch 17, **dadurch gekennzeichnet, dass** die Sammelschienen-Abschnitte in jedem Sammelschienen-Abschnitt (1) durch Vernieten miteinander verbunden sind.

19. Verwendung nach Anspruch 18, **dadurch gekennzeichnet, dass** die Sammelschienen-Abschnitte (1) in einer Rücken-an-Rücken-Verbindung verbunden sind.

20. Verwendung nach Anspruch 18 oder nach Anspruch 19, **dadurch gekennzeichnet, dass** das Vernieten unter Verwendung von selbst durchstoßenden Nieten bewerkstelligt wird.

## Revendications

1. Jonction (J) destinée à joindre ensemble des longueurs de barre omnibus (1) , ladite jonction (J) comprenant deux plaques latérales (6, 7 ; 6a, 7a) qui, pendant l'utilisation, reposent des deux côtés ou sur des conducteurs allongés chevauchants (2, 3, 4, 5) de la barre omnibus (1) et qui s'engagent avec une jonction de conducteur (2') joignant ensemble lesdits conducteurs allongés (2, 3, 4, 5), **caractérisée en ce que** lesdites plaques latérales (6, 7 ; 6a, 7a) sont munies de moyens (12a, 12b, 100) sur lesquels on peut monter un couvercle (11) de la jonction (J) et dans lesquelles des parois latérales opposées (12a, 12b) d'une partie de paroi généralement rectangulaire (12) des plaques latérales (6, 7 ; 6a, 7a) sont munies de plaques de montage (100) comportant lesdits moyens destinés à monter dessus le couvercle associé (11).

2. Jonction (J) destinée à joindre ensemble des longueurs de barre omnibus (1), ladite jonction (J) comprenant deux plaques latérales (6, 7 ; 6a, 7a) qui, pendant l'utilisation, reposent des deux côtés ou sur des conducteurs allongés chevauchants (2, 3, 4, 5) de la barre omnibus (1) et qui s'engagent avec une jonction de conducteur (2') joignant ensemble lesdits conducteurs allongés (2, 3, 4, 5), **caractérisée en ce que** lesdites plaques latérales (6, 7 ; 6a, 7a) sont munies de moyens (12a, 12b, 100) sur lesquels on peut monter un couvercle (11) de la jonction (J) et lesdits moyens (12a, 12b, 100) comprenant une partie de paroi en saillie généralement rectangulaire (12) des plaques latérales (6, 7 ; 6a, 7a) comportant des parois latérales opposées (12a, 12b) s'étendant transversalement par rapport aux conducteurs allongés (2, 3, 4, 5), parois latérales (12a, 12b) pardessus lesquelles des brides (11a, 11b) du couvercle (11) peuvent être engagées.

3. Jonction (J) selon la revendication 2, dans laquelle lesdites parois latérales opposées (12a, 12b) sont munies de plaques de montage (100) comportant lesdits moyens destinés à monter dessus le couvercle associé (11).

4. Jonction (J) selon la revendication 1 ou la revendication 3, dans laquelle les plaques de montage (100) sont boulonnées à la partie de paroi rectangulaire (12).

5. Jonction (J) selon les revendications 1, 3 ou la revendication 4, dans laquelle les plaques de montage (100) sont de section angulaire.

6. Jonction (J) selon l'une quelconque des revendications 1, 3 à 5, présentant des trous (101) dans les plaques de montage (100) pour recevoir des moyens de fixation par vis passant à travers des fentes (S) dans le couvercle (11).

7. Jonction (J) selon l'une quelconque des revendications 1, 3 à 6, dans laquelle les plaques de montage (100) relient solidement ensemble les deux plaques latérales (6, 7 ; 6a, 7a).

8. Jonction (J) selon l'une quelconque des revendications précédentes, comprenant quatre plaques latérales (6, 7 ; 6a, 7a), une paire de plaques latérales (6, 7) ajustées pendant l'utilisation sur une longueur de la barre omnibus (1) chevauchant les conducteurs allongés (2, 3, 4, 5) s'étendant au-delà de la jonction de la barre omnibus et l'autre paire de plaques latérales (6a, 7a) étant connectée à une longueur adjacente de la jonction de la barre omnibus (1) de manière à entourer les conducteurs allongés (2, 3, 4) s'étendant au-delà de l'extrémité de cette longueur de jonction.

9. Jonction (J) selon la revendication 8, dans laquelle chacune des plaques latérales (6, 7 ; 6a, 7a) comporte une bride (6f, 7f) reliée, pendant l'utilisation, à la barre omnibus (1) par un moyen de fixation (B).

10. Jonction (J) selon la revendication 9, dans laquelle le moyen de fixation est un boulon (B).

11. Jonction (J) selon l'une quelconque des revendications B à 10, dans laquelle les plaqués latérales (6, 7a ; 6a, 7a) comportent des pattes (6d, 7d, 7e) formant partiellement lesdites parois latérales opposées (12a, 12b).

12. Jonction (J) selon la revendication 11, dans laquelle les pattes (6d, 7d, 7e) dépassent à angle droit de la bride (6f, 7f) et vers l'intérieur de celle-ci.

13. Jonction (J) selon l'une quelconque des revendications 8 à 12, dans laquelle les plaques latérales (6, 7 ; 6a, 7d) de chaque paire sont formées séparément.

14. Jonction (J) selon l'une quelconque des revendications précédentes, dans laquelle une dimension transversale (6d) de l'une des plaques latérales de la paire associée (6, 7 ; 6a, 7a) est disposée en travers des conducteurs allongés (2, 3, 4, 5) pendant l'utilisation et elle est plus grande qu'une dimension similaire (7d, 7e) de l'autre plaque de la paire.

15. Jonction (J) selon l'une quelconque des revendications 1, 3 à 7 et 9 à 13, dans laquelle, pendant l'utilisation, le couvercle (11) est engagé sur lesdits moyens (12a, 12b, 100) afin d'être réglable le long de la longueur de la barre omnibus (1).

16. Nécessaire de pièces comprenant au moins une longueur de barre omnibus (1) et au moins une jonction (J) selon l'une quelconque des revendications précédentes.

17. Utilisation d'une jonction (J) selon l'une quelconque des revendications 1 à 16 pour connecter ensemble deux longueurs de barre omnibus (1).

18. Utilisation selon la revendication 17 et dans laquelle les sections de barre omnibus dans chaque section de barre omnibus (1) sont connectées ensemble par rivetage.

19. Utilisation selon la revendication 18, dans laquelle les sections de barre omnibus (1) sont connectées ensemble en relation dos à dos.

20. Utilisation selon la revendication 18 ou la revendication 19, dans laquelle ledit rivetage est effectué en utilisant des rivets auto-perceurs.
